# EUROPEAN PATENT APPLICATION

(11) **EP 1 594 089 A2**
(43) Date of publication of application: **09.11.2005**
(21) Application number: 04024031.9
(22) Date of filing: 08.10.2004
(51) Int. Cl.: G06T 9/00

(54) **Scaling of a video signal**

(30) Priority: 07.05.2004 US 840283
(71) Applicant: Intervideo, Inc., Fremont, CA 94538 (US)
(72) Inventor: Chen, Shen-Hung, Taipei 115 (TW)
(74) Representative: Manasse, Uwe

(57) **Abstract**

A transformation method and system of computer system for transforming a series of video signals read at least a piece of video information via a decoding unit and to access a timer of capture rate and a detecting unit of assumption of difference of the P pictures upon the decoding, wherein the variation of P picture is larger than or equal to the difference value of the P picture of the exploited video information decoded by the decoding unit within the exploiting time. Then an image editing unit is utilized to scale the exploited pictures by the video exploiting unit so as secure the smooth playing of the exploited pictures. Moreover, the video information exploited by the video exploiting unit is accessed by the transformation unit to proceed the coding compressing transformation so as to produce a file with smaller capacity.

## Description

### Background of the Invention

### Field of the Invention

The present invention relates to a transformation method and system of computer system for transforming a series of video signals. More, especially, upon the exploiting of the pictures via a video capture unit according to the sets of the capture rate and the assumption of difference of P Frame of MPEG format of the pictures.

### Description of the Related Art

Upon the development of the computers, which jumped through the poor user interface and the astonishing high prices from the first generation made of vacuum tube, the second and the third generation, the personal computers have been more popular in the daily life of human being. As the advance of the information technology, the developing of computers has been involving into the appliances, and people have been getting used to watch TV, listen to the music, play DVD or VCD, and etc. by computers.

Furthermore, the prosperous development of Internet from 2000 even incites the purchasing behaviors of people. According to the research and prediction of e-Marketer, the annual composite growing rate of market revenue of B2C (Business to Customer) from 2000 to 2004 in Europe and Asia is 118% and 87% respectively. Moreover, the prosperity of the Mobile Commerce (M-Commerce) even advances the flexibility of time and space. Such kind of development has not only provoked the concerns of the industry but also contributed to a new business revolution of competitiveness.

Because of the prevailing of Internet, the industry get a new direction of marketing via browsing the websites. Through Internet access by user browsing, Internet information has been started to be used in people's life services directly such as the on-line shopping, the on-line polling, and etc. Therefore, to promote more consumers to do on-line transaction via Internet, companys must provide more obvious information about products through the multimedia information posted on Internet so as to evoke the coustomers' transcation desires via on-line browsing, even proceeding their trade action.

Nowadays, the popular compressing format is a coding method of MPEG (Motion Picture Expert Group) for video information in computer system. And the popular compressing methods include discrete cosine transform (DCT), quantization, and Huffman encoding. In the algorithm, each size of the picture information must be the same, so the compressing degree will be varied dynamically while compressing each picture. However, there is still extra compressing between the frames, wherein the compressing is called inter-frame compression. Its basic concept is to eliminate the spatial redundancy among the series of pictures. Rather than compressing each complete picture, it's better to take care of the variation between the pictures.

The group of pictures of MPEG is formed of three different compressed frames-I frame, P frame, and B frame. Take the DCT compressing method for example, the picture is transformed via DCT to remove the high frequency, which is invisible for the naked eyes of people, and only pass the parts of low frequency. Wherein, the I frame, usually named as intra coded pictures, is the first one of the group of the pictures, which includes the complete picture, so it can be decoded individually. Further to the P frame-also called the predictive reference picture-is to eliminate the duplicative parts of the pictures and only record the differences between the two pictures according to the previous I and P frames. As to the B frame-the bi-directionally predictive coded picture-may get some errors as time passing by with each afore-mentioned pictures proceeding as the same acts. Because the errors are cumulative, it is necessary to re-insert an I frame occasionally to reset all the information. Besides, it is also feasible to insert a special frame to compare the pre and post frames so as to advance the effectiveness of the algorithm. Among them, the size of I frame is the largest one, and then the P frame, and the last B frame. Furthermore, the data constituted of many I, P, and B frames is so called GOP (Group of Pictures).

From the aspect of MPEG compressing method, the displaying is available with video file formats including the three file formats: .VOB format, .IFO format, and .BUP format. Each VOB format includes the combination of the video signals, the audio signals, the letter-box, and etc. And each IFO file provides the important introduction information to the media playbak machine, such as the beginning of chapters, the locations of audio signals or letter-box. As to the BUP file, it is only the backup file of IFO. Generally, the video playing format of DVD is MPEGII, so there often are 29.97 frames each second, and the transmission rate is often 3~10MB per second. In the other word, the transmission speed can reach to 180~600M per minute. Therefore, when using such traditional compressing method to produce the introduction file of products and post it on the website for customers' retrieving, in addition to three files, which should be offered inevitably, the size of the file and the limit of the bandwidth are also another concerns, which may obstacle the purpose of promotion.

To meet the demand, there are various video signal transferring systems launched in the market, but all the systems only transfer the complete content of the video file into another kind of file format, neither the demand of enterprises which present the product characteristics via the video signal format being satisfied, nor the significant difference in the size among the files. In addition, the possible long time waiting for on-line viewing the product introduction on the website may cause bad impression of the product to the users and even punch down the desires of purchasing and the behaviors of buying.

Hence, to propose the solution of a video signal coding transferring structure and measures to the afore-mentioned problem, which has been the consistent expectation and concern of the inventor, not only can improve the failures of the poor transmission because of the large size of the conventional video signal file and the inevitable many video files, but also can advance the practical value of the enterprise's product promotion. Based on the engagement in the research, development, and practical sales experience on the related products of video for many years, the idea of invention has been in embryo, and finally, a kind of video signal coding transferring structure and improved measure have been figured out via the dedicated personal professional knowledge, study design, and seminars.

### Summary of the Invention

The purpose of this invention is to provide a transformation method and system of computer system for transforming a series of video signals, wherein the covered timer is to offer the time of exploiting pictures, the detecting unit is to provide the assumption of difference of P frame of a MPEG picture, the video capture unit is to exploit the video signal information, decoded by the decoding unit, with the variation of the P frame being larger than the predetermined difference, within the predetermined capture rate, and the transformation unit is to proceed the transformation according to the video signal information selected by the video capture unit.

The second purpose of the present invention is to offer a transformation method and system of computer system for transforming a series of video signals. Via altering the capture rate and the predetermined difference of the P frame, the video signal pictures, decoded by the decoding unit, are exploited dynamically so as to advance the variation of exploiting pictures.

The third purpose of this invention is to provide the function capable of both the image displaying and editing at the same time. As the images are being displayed by a displaying device, the video signal information, played by the displaying device, is catched by the video capture unit, and stored in the second storage unit. Then the video signal information stored in the second storage unit is proceeded the editing such as increasing, deleting, moving, and etc. by the invented image editing unit of this invention.

The forth purpose of this invention is to punch down the capacity of the file effectively via adjusting the capture rate and the predetermined difference of the P frame. It can effectively diminish the transmitted capacity of the file by decreasing the capture rate and increasing the predetermined difference of the P frame.

The fifth purpose of this invention is to offer an e-commerce practice. To conquer the restriction of the bandwidth, it can effectively speed up the accessing speed at the side of the browsers by adjusting the capture rate and the predetermined difference of the P frame to offer a file with smaller file size on Internet.

The last purpose of this invention is to meet the demands of the users at the end quickly. In other word, when the browsers are retrieving on Internet, the offered file with smaller file size can effectively decrease the transferring time of downloading the file of the browsers.

In conclusion, the present invention is related to a transformation method and system of computer system for transforming a series of video signals. Upon accessing the capture rate of the timer and the predetermineed difference of the P frame of the detecting unit by video capture unit, at least a piece of the video signal information, stored in the first storage unit, is accessed and decoded by the decoding unit, and the video signal information, decoded by the decoding unit, is then retrieved by the displaying device. While displaying, the decoded video signal information played by the displaying device is captured by the video capture unit accordingly to the capture rate of timer and the assumption of difference of P picture of detecting unit, wherein the variation of P frame is larger than the predetermined difference of the P picture within the capture rate. And via the transformation unit, the video signal information, stored in the second storage unit, is coded and transformed it into a single and animation file with smaller file size. Therefore, the present invention with dynamic setting of desire capture rate and predetermined difference of P frame can meet the demands of the users. Moreover, the offering of the image editing unit facilitates the smooth of the retrieved pictures and produces the expected effect. In addition, the present invention is also applicable to the development of e-commerce. Through this invention, the constituted files with smaller size speed up the accessing speed and shorten the waiting time of the users, who downloading the files, under the restriction of bandwidth.

### Brief Description of the Drawing

Fig. 1 is an illustrated view of a transformation system of computer system for transforming a series of video signals of the present invention.

Fig. 2 is an illustrated view of the present invention, which comprises the video signal coding transferring structure of displaying unit.

Fig. 3 is an illustrated view of the system of image editing unit's functions of the present invention.

Fig. 4 is an illustrated view of a transformation system with the restriction of picture of this invention.

Fig. 5 is an illustrated view of the procedure of the present invention.

Fig. 6 is an illustrated view of the business model on the present invention.

### Detailed Description of the Preferred Embodiment

To have a further understanding about the features of the structure and the achieved effects, of the present invention, the preferred embodiment and detailed description are unfolded as following.

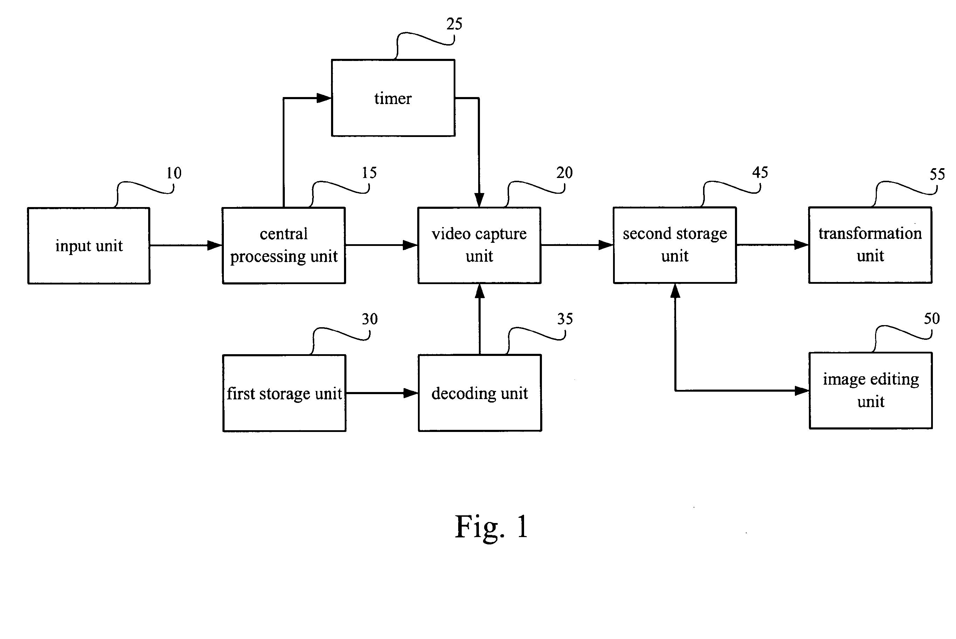

As shown in Fig. 1, a transformation system of computer system for transforming a series of video signals comprises an input unit 10, which is offered for the user to dictate commend of video signal coding transformation, then which command is accepted by the central processing unit 15 and drives the video capture unit 20 to proceed the act of video signal exploiting. First of all, the user must offer at least a piece of video signal information in the first storage unit 30, and then the video signal information is accessed and decoded by the decoding unit 35. Upon the decoding, the video signal information, decode by the decoding unit 35, is exploited by the video capture unit 20 according to the capture rate, offered by the timer 25, and then the exploited pictures are stored in the second storage unit 45. Following, the stored video signal information stored in the second storage unit 45 is proceeded the coding compressing transformation by the transformation unit 55 so as to constitute a motion picture file or video signal file with smaller capacity.

Therein, the transformation unit 35 is to offer a Motion JPEG of compression format, a Motion Gif of compression format, or other motion pictures of compression format. In addition, while the video signal transferring structure and method of the present invention is built in the computer system, the input unit 10 can be set to be driven by the computer system automatically to send the command of video signal coding transferring to the central processing unit 15, so as to proceed the act of video signal information exploiting.

The above mentioned video signals in the first storage unit 30 are the compression data of MPEG format, which therefore, include various files of .VOB, .IFO, .BUP. Therein, each .VOB file includes the combination of video signal, audio signal, and letter-box. Hence the content of .VOB file even covers various complete images-I pictures, predictive reference P pictures, and B pictures of compensating image.

The present structure includes the timer 25 and image editing unit 50, wherein the inside of said timer 25 further covers a time register, and via the time register to calculate the passing time of picture exploiting. Additionally, the capture rate offered by said timer 25 is a changeable value. The original value is the pre-setting of the system, and the content dominantly comprises the time of scene or chapter of the general displaying images. The user can change the capture rate dynamically accordingly to the desirable time so as to produce the user's requested content of file.

In addition, the video signal in the second storage unit 45 can be imported into the image editing unit 50 so as to further be proceeded with the editing such as increasing, amending, deleting, and etc.

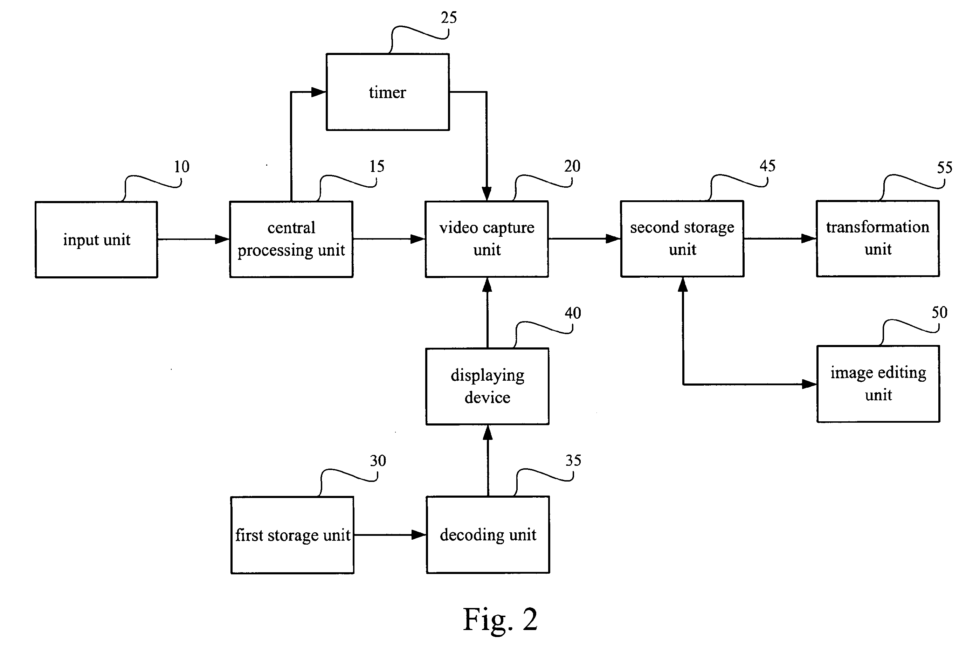

Refer to Fig. 2, the present invention further comprises a displaying device 40 to receive the decoded video signal information from the decoding unit 35 so as to proceed the displaying. Then according to the capture rate of the timer 25, the video signal information, played by the displaying device 40, is captured by the video capture unit 20 within the capture rate.

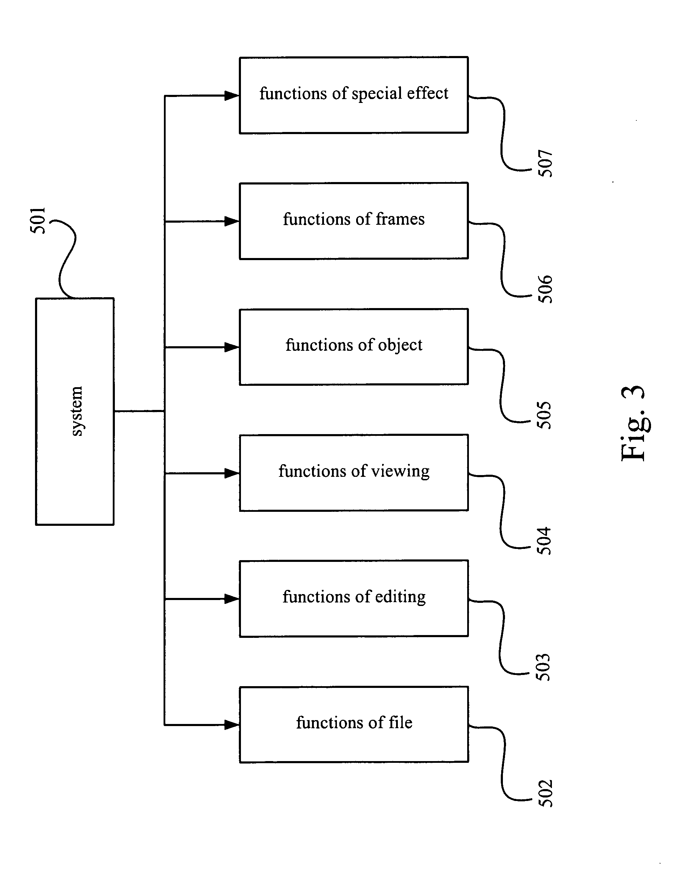

As shown in Fig. 3, the image editing unit 50 is initially set by the system 501 to offer: the functions of file 502 such as opening and storing the file; the functions of editing 503 such as copying and pasting; the functions of viewing 504 such as zooming in, zooming out, and displaying; the functions of object 505 such as resetting, fading, and image merging; the functions of frames 506 such as increasing and deleting the pictures, and inserting letters; and the functions of special effect, such as watermark, filer, and mosaic. Before the editing of the pictures, the user can view the content of the file by the offering of the image editing unit 50 so as to secure the user's expected effect of the picture after the coding.

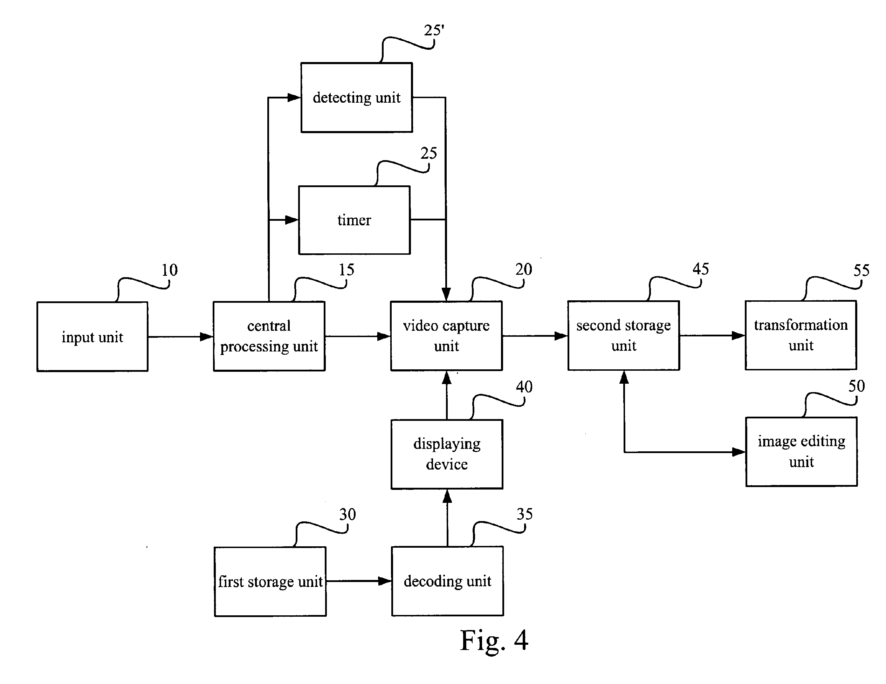

Shown in Fig. 4, the present invention further comprises a detecting unit 25', which offers the assumption of difference of the P picture. Comparing the assumption value and the variation of P pictures of video signal information played by the displaying device 40, if the variation of P picture is found smaller than the assumption of difference of P picture-which indicates that the difference degree between the pictures is not significant enough- the P picture will be discarded. Therein, the assumption of difference of the P picture can be fixed by the user dynamically according to the situational request. Additionally, in the aspect of B picture, all the B pictures, played by the displaying device 40, are captured in this present invention. Via the offering of image editing unit 50, the position of the B picture can be put appropriately. This being the case, upon the retrieving of the pictures, it not only can achieve the fluent displaying of pictures, but also effectively punch down the capacity of file produced by the transformation unit 55 according to the sets of capture rate and the assumption of difference of P picture.

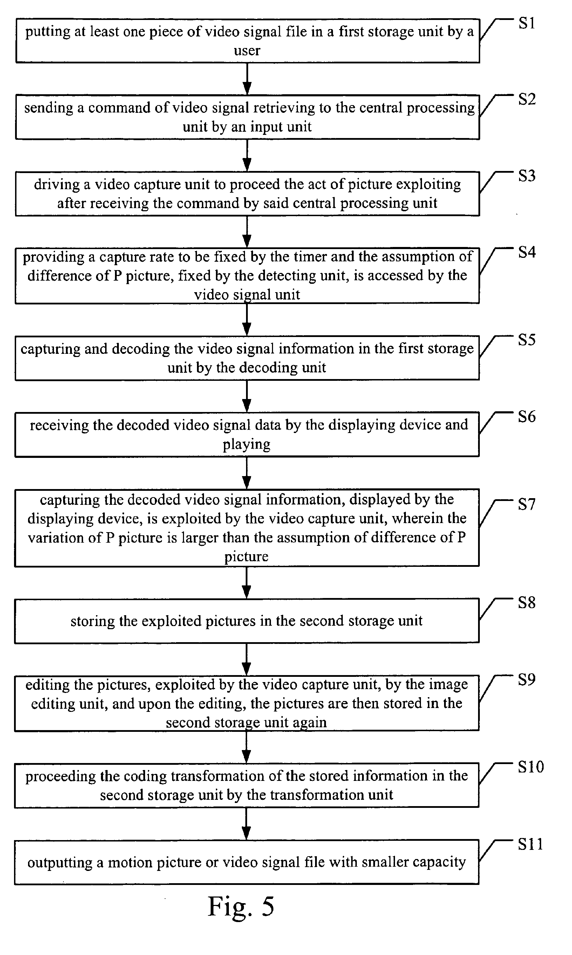

Refer to Fig. 5, a transformation method of computer system for transforming a series of video signals comprises the steps of:
- Step S1:: putting at least one piece of video signal file in a first storage unit by a user.
- Step S2:: sending a command of video signal retrieving to the central processing unit by an input unit.
- Step S3:: driving a video capture unit to proceed the act of picture exploiting after receiving the command by said central processing unit.
- Step S4:: providing a capture rate to be fixed by the timer and the assumption of difference of P picture, fixed by the detecting unit, is accessed by the video signal unit.
- Step S5:: capturing and decoding the video signal information in the first storage unit by the decoding unit.
- Step S6:: receiving the decoded video signal data by the displaying device and playing.
- Step S7:: capturing the decoded video signal information, displayed by the displaying device, is exploited by the video capture unit, wherein the variation of P picture is larger than the assumption of difference of P picture.
- Step S8:: storing the exploited pictures in the second storage unit.
- Step S9:: editing the pictures, exploited by the video capture unit, by the image editing unit, and upon the editing, the pictures are then stored in the second storage unit again.
- Step S10:: proceeding the coding transformation of the stored information in the second storage unit by the transformation unit, and
- Step S11:: outputting a motion picture or video signal file with smaller capacity.

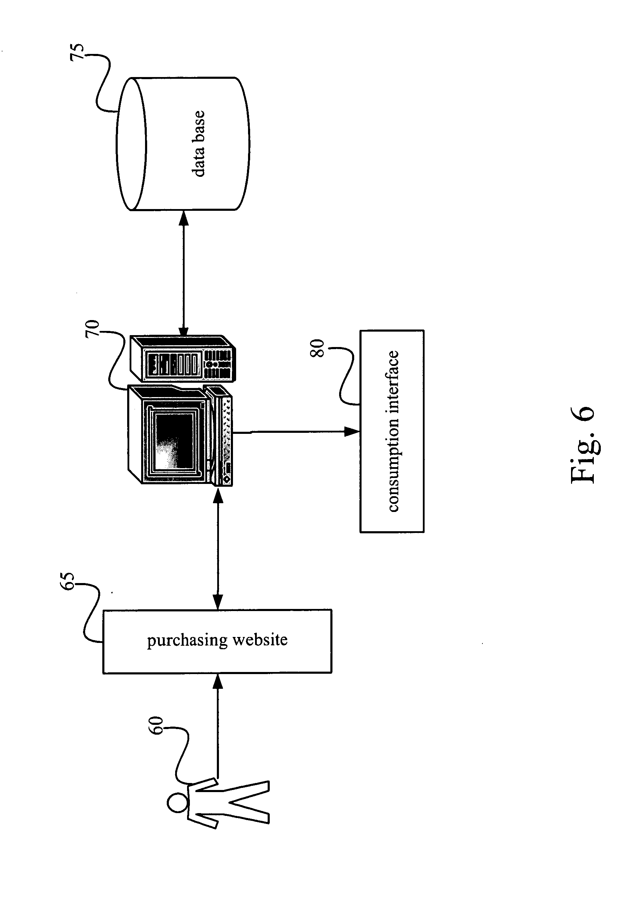

To have a further description about the practical application of this invention, the business model of internet transaction will be explained by the simple example. As shown in Fig. 6, which is the preferred embodiment of business model structure of this invention, wherein comprises a server device 70, which continuously receives and proceeds the consumptions from the browser-sides 60. When the browser-side 60 gets into the purchasing website 65 to click the introduction file of desire product, the video signal file of production introduction with smaller capacity invented by the present invention in the data base 75 is retrieved by the purchasing website 65 in time, and displayed via the internet for the watching of the browser. Because the video signal file of product introduction is with smaller capacity, it doesn't take the browser much time to wait for the downloading. Upon the end of watching and then the incited purchasing desire of the browser 60, the consumption interface 80 can be utilized to proceed the buying.

In conclusion, the present invention comprises a timer, which offers a capture rate, a detecting unit, which offers the assumption of difference of P picture so as to compare the variation degree of pictures. While the client-side sends an external command, the external command from the input unit is then received by the central processing unit, which then drives the video capture unit so as to proceed the act of picture exploiting. In addition, the first storage unit offers at least a piece of video signal information, which is captured by the decoding unit. Upon decoding, the decoded video signal data is accessed and played by the displaying device. The video capture unit then retrieves and stores the decoded video signal information in the second storage unit according to the capture rate and the assumption of difference of P picture. And further, the video signal information in the second storage unit is proceeded the coding compressing transformation by the transformation unit so as to produce the video signal file of motion picture file with smaller capacity. The present invention meets the user's demand of dynamically setting the desirable exploiting time and the assumption of difference of P picture. Moreover, the expected file is constituted by the offering of image editing unit. The present invention is further applicable to the development of e-commerce. Via the present invention, the file with smaller capacity is offered so as to speed up the accessing speed effectively and shorten the waiting time of the user downloading the file under the restriction of bandwidth.

In conclusion, this invention definitely achieves creativity, improvement, and more usability for the users in the industry. This being the case, it should be qualified for the patent applications in the intellectual patent regulation of our country, thus being proposed for the approval of the patent. Looking forward to the kind rendering of the approval at the earliest convenience.

The above-mentioned practice is only a preferred embodiment of this invention, not the specified limit of it. All the parallel changes and revisions of the shape, the structure, the feature, and the spirit evolving from this invention should be included in the field of the claimed patent of this invention.

## Claims

1. A transformation system of computer system for transforming a series of video signals comprising:
a decoder receiving video signals for decoding into a series of video frames;
a timer providing a capture rate of the video frames;
a video capture unit to capture at least the two frames as a series of captured frames based on the capture rate from said timer.; and
a transformation unit to temporarily store the captured frames and then to transform the captured frames into an single animation file.

2. The transformation system of claim 1, wherein the video frames are compatible with MPEG format.

3. The transformation system of claim 1, wherein the single animation file is compatible with JPEG format.

4. The transformation system of claim 1, wherein the single animation file is compatible with GIF format.

5. A transformation method of computer system for transforming a series of video signals comprising the steps of:
receiving video signals to a decoder for decoding into a series of video frames;
providing a capture rate of the video frames from a timer;
capturing at least two frames as a series of captured frames based on the capture rate from the timer; and
transforming the captured frames into an single animation file.

6. The transformation method of claim 5, wherein the video frames are compatible with MPEG format.

7. The transformation method of claim 5, wherein the single animation file is compatible with JPEG format.

8. The transformation system of claim 5, wherein the single animation file is compatible with GIF format.
